# EUROPEAN PATENT SPECIFICATION

(11) **EP 2 208 907 B1**
(45) Date of publication and mention of the grant of the patent: **08.06.2011**
(21) Application number: 10150108.8
(22) Date of filing: 05.01.2010
(51) Int. Cl.: F16D 65/00, F16D 65/14, F16J 15/32

(54) **Rollback seal**
Rückholdichtung
Joint de récupération

(30) Priority: 16.01.2009 JP 2009007164
(43) Date of publication of application: 21.07.2010
(73) Proprietor: NOK Corporation, Minato-ku Tokyo 105-8585 (JP)
(72) Inventor: Nakamura, Takafumi c/o NOK CORPORATION, Nihonmatsu-shi Fukushima (JP); Ookouchi, Kakeru c/o NOK CORPORATION, Nihonmatsu-shi Fukushima (JP)
(74) Representative: TBK

(56) References cited:
- DE-A1- 4 104 070
- JP-A- 11 280 805
- JP-A- 2002 031 174
- US-A- 4 342 463
- US-A- 4 387 901

## Description

### BACKGROUND OF THE INVENTION

### Field of the Invention

This invention relates to a rollback seal and in particular, to a rollback seal for a braking apparatus used in a bicycle. More specifically, the present invention relates to a rollback seal that a piston can be reliably returned to a brake release position from a brake position with improved sealing characteristics over a long service life.

### Description of the Conventional Art

Bicycling is becoming an increasingly popular form of recreation as well as a means of transportation. One particular component of the bicycle, which has been considered functionally important and thus repeatedly redesigned over the past years, is the braking apparatus for a bicycle. In particular, braking power of the braking apparatus is a substantive factor for securing the safety thereof.

There are several types of bicycle braking apparatus currently. Examples of types of common bicycle braking apparatus include a rim brake, a caliper brake and a disc brake. If a rider wants a high performance braking apparatus, then a disc brake system is selected. The disc brake system provides a big braking power in relationship to operating force applied to a brake lever. Moreover, the disc brake system expectedly provides a high level braking performance consistently in all types of weather and riding conditions.

Generally, the disc brake is provided with a pair of brake pads that are movably mounted to a housing. The brake pads are pressed to a disc rotor that is fixed to a wheel to halt rotation of the disc rotor and thus rotation of the wheel. The brake pads mechanically moved toward the disc by hydraulic pressure.

In such hydraulic brake system, a spring means is used to return the pistons from a brake position to a brake release position. However, in case of employing the spring means, there arise problems that not only the structure becomes complicated but also total weight of the hydraulic brake system is increased. Among others, increased total weight of a bicycle is a fatal flaw for the racing bicycles.

In view of the above, there has been proposed a rollback seal 400 according to the preamble of claim 1 which is shown in Figs 6 to 8 of JP 2002-31174 A. Also reference is made to Japanese unexamined patent publication No. 2005-249190. The rollback seal 400 in the hydraulic brake system is used in a space between a piston 31 and a housing 32 of a hydraulic brake 3 which brakes a wheel 1 by clamping a disc brake rotor 2 fixedly coupled to the wheel 1, namely, the seal 400 is located in a annular groove 33 formed in the hosing 32.

Further, the rollback seal 400 has an approximately rectangular sectional shape, and has an annular recess 420 formed on one end face 410 at the side where hydraulic pressure acts on the piston 31. On the other hand, there is formed a cutout section 340 in the annular groove 33 at the opposite side to that where the hydraulic pressure acts on the piston (left side in the figure).

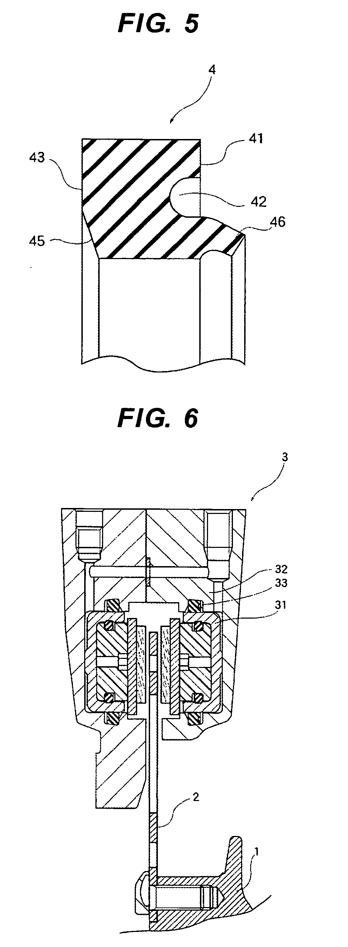

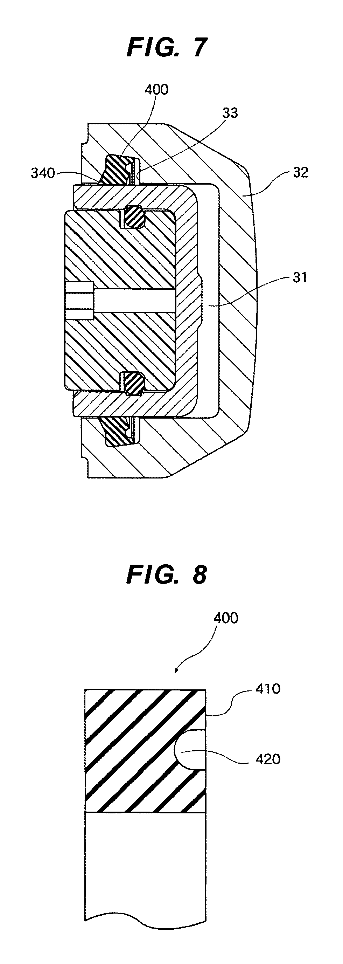

As shown in Fig. 7, when the hydraulic pressure acts on the piston 31 to move it to a brake position, the inner peripheral surface of the rollback seal 400 is moved leftward in the figure together with the piston 31 due to high friction resistance between the inner peripheral surface of the rollback seal 400 and the outer peripheral surface of the piston 31, thereby the whole of the rollback seal 400 is pressed leftward in the figure by the applied hydraulic pressure. In order to allow for the leftward movement of the rollback seal 400, the cutout 340 is formed on one of the side walls of the annular groove 33. And, when the hydraulic pressure is released, the piston 31 is returned to the state that no braking force is applied as shown in Fig. 6, due to restoration force of the rollback seal 400.

The rollback seal 400 used in the conventional disc brake system has a rectangular sectional shape as shown in Fig. 8. However, there arises a problem that sufficient amount of rollback (deformation) cannot be ensured at low temperature with such rollback seal 400.

Further, there also arises a problem that a corner portion of the inner periphery of the rollback seal 400 is bitten by and between the piston 31 and the housing 32, and the rollback seal 400 is damaged.

A further rollback seal is known from US 4,387,901 A.

### SUMMARY OF THE INVENTION

### Problem to be Solved by the Invention

The present invention is made by taking the points mentioned above into consideration, and it is an object of the present invention to provide a rollback seal by which a total weight of the brake system can be reduced, a sufficient amount of rollback is ensured even at low temperature, a function of reliably returning a piston from a brake position to a brake release position can be achieved, and stable sealing characteristics can be achieved over a long service life.

The above object is solved with a rollback seal having the features of claim 1.

The present invention has the following advantages.

According to claim 1, there is provided a rollback seal that exerts a function capable of ensuring sufficient amount of rollback at low temperature, and reliable return of a piston from a brake position to a brake release position.

Furthermore, since the annular seal member has the auxiliary lip, there is provided a rollback seal capable of reliably preventing coming-in of actuating fluid between the rollback seal and the piston.

According to claim 2, there is provided a rollback seal that ensures sufficient friction resistance between the rollback seal and the piston with sufficient amount of rollback.

According to claim 3, there is provided a rollback seal that exerts a better function in such applications that higher heat resistance is required.

According to claim 4, there is provided a rollback seal that ensures more sufficient amount of rollback at wide range of temperature.

### BRIEF EXPLANATION OF DRAWINGS

FIG. 1 is a sectional view illustrating a rollback seal according to an explanatory example in a state of being installed in a hydraulic brake system;
FIG. 2 is a sectional view of only the rollback seal illustrated in FIG. 1;
FIG. 3 is a view of the hydraulic brake system illustrated in FIG. 1 which becomes in a braking state by the action of hydraulic pressure.
FIG. 4 is an enlarged view of a part of the hydraulic brake system illustrated in FIG. 3;
FIG. 5 is a sectional view of only a rollback seal according to an embodiment of the present invention;
FIG. 6 is a sectional view illustrating a conventional hydraulic brake system in a state of being attached to a wheel;
FIG. 7 is a sectional view illustrating a conventional rollback seal in a state being installed in a hydraulic brake system; and
FIG. 8 is a sectional view of only the rollback seal illustrated in FIG. 7.

### DETAILED DESCRIPTION OF PREFERRED EMBODIMENTS

Next, a description will be given of an embodiment in accordance with the present invention with reference to the accompanying drawings.

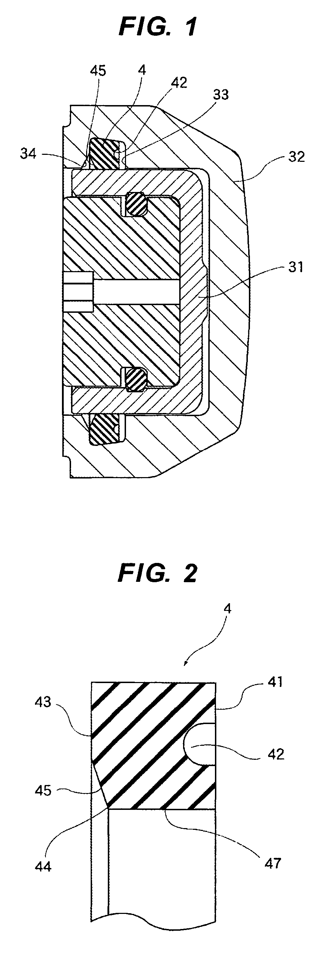

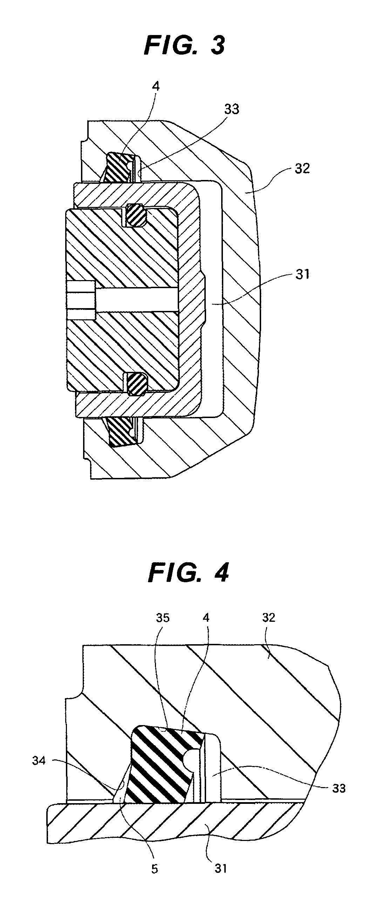

Referring to FIGS. 1 to 5, the best mode for carrying out the present invention will be explained, wherein FIG. 1 is a sectional view illustrating a rollback seal according to an explanatory example in a state of being installed in a hydraulic brake system, FIG. 2 is a sectional view of only the rollback seal illustrated in FIG. 1, FIG. 3 is a view of the hydraulic brake system illustrated in FIG. 1 which becomes in a braking state by the action of hydraulic pressure, FIG. 4 is an enlarged view of a part of the hydraulic brake system illustrated in FIG. 3, and FIG. 5 is a sectional view of only a rollback seal according to an embodiment of the present invention.

Meanwhile, an entire hydraulic brake system is explained with reference to FIG. 6 which has been used in the description of conventional art.

As shown in FIGS. 1, 2 and 6, the rollback seal 4 used between a piston 31 and a housing 32 of a hydraulic brake 3 to brake a wheel 1 by clamping a disc rotor 2 fixedly attached to the wheel 1 and is arranged in an annular groove 33 formed in the housing 32.

The rollback seal 4 has a substantially rectangular sectional shape. The annular rollback seal 4 has an annular recess 42 formed in one end face 41 thereof (right side in the figures) at the side where the hydraulic pressure acts on, and has a chamfered section 45 formed at a piston 31 side corner 44 of the other end face 43 thereof at the opposite side to that where the recess 42 is formed.

Specifically, the chamfered section 45 extends radially inward from an approximate middle in radial width of the other end face 43 with an inclination angle of 10 to 30 degrees, and more preferably with an inclination angle of 15 to 25 degrees, relative to the other end face 43.

When the inclination angle is more than 30 degrees, a contact area between the rollback seal 4 and the piston 31 becomes smaller so that sufficient friction resistance between them cannot be obtained to cause slippage between the rollback seal 4 and the piston 31. On the other hand, when the inclination angle is less than 15 degrees, sufficient amount of rollback cannot be obtained.

The annular groove 33 has a cutout section 34 formed at a location opposite to the chamfered section 45 of the rollback seal 4, and has a peripheral surface 35 tapering toward the side where the hydraulic pressure acts (right side in the figure).

Due to the existence of the cutout section 34, in combination with the existence of the chamfered section 45, it becomes possible to ensure a larger amount of rollback (a movable distance of the rollback seal 4 together with the piston 31 toward the disc rotor 2 side).

That is to say, as shown in FIGS. 3 and 4, even when hydraulic pressure acts on the piston 31 to make the piston 31 in a braking state (leftward movement in the figures), there remains a space 5 between the rollback seal 4 and the cutout 34 of the annular groove 33.

Accordingly, a sufficient amount of rollback can be ensured even at low temperature, and the problem that the rollback seal 4 is damaged due to the fact that a corner portion of the inner periphery of the rollback seal 4 is bitten by and between the piston 31 and the housing 32 can be avoided.

Further, since the peripheral surface 35 of the annular groove 33 tapers toward the side where the hydraulic pressure acts (right side in the figures), the rollback seal 4 is effectively prevented from moving toward the side where the hydraulic pressure acts (right side in the figures), thereby exerting surer rollback function.

Further, in the case that a tapered surface tapering toward the left side in the figures is formed at the opposite side to that where the hydraulic pressure acts (left side in the figures) of the peripheral surface 35 of the annular groove 33, the rollback seal 4 is more strongly pressed toward the piston 31 side to produce increased friction resistance between the rollback seal 4 and the piston 31 when hydraulic pressure acts.

Further, the rollback seal 4 may be formed of a rubber-like elastic material such as NBR, HNBR or the like, in addition to a fluoride rubber material. For the application in which higher heat resistance is needed, the fluoride rubber material is preferable, and a low temperature usable fluoride rubber having wide range of working temperature is more preferable.

Further, the surface roughness of an inner peripheral surface 47 of the rollback seal 4 contacting with the outer peripheral surface of the piston 31 is preferable to be small in view of increasing contact resistance.

Next, the embodiment of the present invention will be described with reference to FIG. 5. This embodiment differs from the above-mentioned explanatory example in a point that an auxiliary lip 46 is provided on an inner periphery side of the one end face 41 thereof. With such structure, it is possible to more reliably prevent coming-in of actuating fluid between the rollback seal 4 and the piston 31, thereby to avoid occurrence of slippage between the rollback seal 4 and the piston 31.

The rollback seal in this embodiment can secure an about 40% increased amount of rollback compared with the conventional rollback seal not only at the room temperature but also at lower temperature of minus 10 degrees C, thereby to ensure effective sealing function even when a frictional material of a disc brake wears down and a moving distance of the piston increases.

The present invention is not limited to the above-mentioned best mode for carrying out the present invention, but needless to say, various changes and modifications can be made without departing from the scope of the invention herein defined.

A rollback seal, which is used in a space between a piston and a housing of a hydraulic brake configured to brake a wheel by clamping a disc rotor fixedly attached to the wheel, is arranged in an annular groove of the housing, has a substantially rectangular sectional shape, has an annular recess formed in one end face thereof at the side where hydraulic pressure acts on the piston, and has a chamfered section formed at a piston side corner of the other end face thereof at the opposite side to that where the recess is formed, thereby to reduce total weight of brake system, secure sufficient amount of rollback at low temperature, and reliably return a piston from brake position to release position with improved sealing characteristics over a longer service life.

## Claims

1. A rollback seal (4), which is used in a space between a piston (31) and a housing (32) of a hydraulic brake (3) configured to brake a wheel (1) by clamping a disc rotor (2) fixedly attached to the wheel (1), is arranged in an annular groove (33) formed in the housing (32), and has an annular recess (42) formed in one end face (41) thereof at the side where hydraulic pressure acts on the piston (31), **characterized in that** a chamfered section (45) is formed at a piston side corner portion of the other end face (43) thereof at the opposite side to that where the recess (42) is formed, and
said rollback seal (4) has an auxiliary lip (46) formed in said one end face (41) to be closely in contact with an outer peripheral surface of the piston (31).

2. The rollback seal (4) as claimed in claim 1, wherein the chamfered section (45) extends radially inward from an approximate middle in radial width of said other end face (43) with an inclination angle of 10 to 30 degrees relative to said other end face (43).

3. The rollback seal (4) as claimed in claim 1 or 2,
wherein said rollback seal (4) is formed of a fluoride rubber material.

4. A hydraulic brake (3) having a piston (31), a housing (32) and an annular recess (42), and being configured to brake a wheel (1) by clamping a disc rotor (2) fixedly attached to the wheel (1), further having a rollback seal (4) as claimed in any of claims 1 to 3 and arranged in said annular groove (33), wherein said annular groove (33) formed in the housing (32) has a cutout section (34) at a location opposite to the chamfered section (45).

## Patentansprüche

1. Rückstelldichtung (4), welche in einem Raum zwischen einem Kolben (31) und einem Gehäuse (32) einer hydraulischen Bremse (3) verwendet wird, die ausgebildet ist, um ein Rad (1) durch Klemmen einer fest an dem Rad (1) angebrachten Drehscheibe (2) zu bremsen, wobei sie in einer ringförmigen Nut (33) angeordnet ist, die in dem Gehäuse (32) ausgebildet ist, und eine ringförmige Vertiefung (42) aufweist, die in einer Endfläche (41) von ihr auf der Seite ausgebildet ist, auf der der Hydraulikdruck auf den Kolben (31) wirkt,
**dadurch gekennzeichnet, dass**
ein abgeschrägter Anschnitt (45) an einem kolbenseitigen Eckabschnitt der anderen Endfläche (43) von ihr an der entgegengesetzten Seite zu jener ausgebildet ist, an der die Vertiefung (42) ausgebildet ist, und
die Rückstelldichtung (4) eine Hilfslippe (46) hat, die in der einen Endfläche (41) ausgebildet ist, um in engem Kontakt mit einer Außenumfangsfläche des Kolbens (31) zu sein.

2. Rückstelldichtung (4) gemäß Anspruch 1, wobei sich der abgeschrägte Anschnitt (45) von einer annähernden Mitte in einer radialen Breite der anderen Endfläche (43) mit einem Neigungswinkel von 10 bis 30 Grad relativ zu der anderen Endfläche (43) radial nach innen erstreckt.

3. Rückstelldichtung (4) gemäß Anspruch 1 oder 2, wobei die Rückstelldichtung (4) aus einem Fluoridgummimaterial ausgebildet ist.

4. Hydraulische Bremse (3) mit einem Kolben (31), einem Gehäuse (32) und einer ringförmigen Vertiefung (42), und wobei sie ausgebildet ist, um ein Rad (1) durch Klemmen einer Drehscheibe (2) zu bremsen, welche fest an dem Rad (1) angebracht ist, welche des Weiteren eine Rückstelldichtung (4) aufweist, wie sie in einem der Ansprüche 1 bis 3 beansprucht ist, und die in der ringförmigen Nut (33) angeordnet ist, wobei die ringförmige Nut (33), welche in dem Gehäuse (32) ausgebildet ist, einen ausgeschnittenen Anschnitt (34) an einem Ort gegenüber dem abgeschrägten Anschnitt (45) aufweist.

## Revendications

1. Joint (4) de déformation, qui est utilisé dans un espace entre un piston (31) et un carter (32) d'un frein hydraulique (3) configuré pour freiner une roue (1) en serrant un rotor de disque (2) fermement attaché à la roue (1), est agencé dans une rainure annulaire (33) formée dans le carter (32), et a un évidement annulaire (42) formé dans une face (41) d'extrémité de celui-ci au niveau du côté où la pression hydraulique agit sur le piston (31), **caractérisé en ce que** un tronçon (45) chanfreiné est formé au niveau d'une partie de coin côté piston de l'autre face (43) d'extrémité de celui-ci au niveau du côté opposé à celui où l'évidemment (42) est formé, et ledit joint (4) de déformation a une lèvre auxiliaire (46) formée dans ladite une face (41) d'extrémité qui doit être en contact étroit avec une surface périphérique externe du piston (31).

2. Joint (4) de déformation tel que revendiqué dans la revendication 1, dans lequel le tronçon chanfreiné (45) s'étend radialement vers l'intérieur d'un milieu approximatif en larguer radiale de ladite autre face (43) d'extrémité avec un angle d'inclinaison de 10 à 30 degrés par rapport à ladite autre face (43) d'extrémité.

3. Joint (4) de déformation tel que revendiqué dans la revendication 1 ou 2, dans lequel ledit joint (4) de déformation est formé d'un matériau en caoutchouc fluoré.

4. Frein hydraulique (3) ayant un piston (31), un carter (32) et un évidement annulaire (42), et étant configuré pour freiner une roue (1) en serrant un rotor de disque (2) fermement attaché à la roue (1), ayant en outre un joint (4) de déformation tel que revendiqué dans l'une des revendications 1 à 3 et agencé dans ladite rainure annulaire (33), où ladite rainure annulaire (33) formée dans le carter (32) a un tronçon (34) d'isolement à un endroit opposé au tronçon chanfreiné (45).
